(19) Europäisches Patentamt / European Patent Office / Office européen des brevets

(11) **EP 2 375 579 B1**

(12) **EUROPEAN PATENT SPECIFICATION**

(45) Date of publication and mention of the grant of the patent:
**07.10.2015 Bulletin 2015/41**

(21) Application number: **09837343.4**

(22) Date of filing: **03.12.2009**

(51) Int Cl.:
*H04B 7/02* (2006.01)    *H04L 1/04* (2006.01)
*H04L 1/06* (2006.01)    *H04L 27/26* (2006.01)

(86) International application number:
**PCT/CN2009/075301**

(87) International publication number:
**WO 2010/078786 (15.07.2010 Gazette 2010/28)**

(54) **MULTIPLE-ANTENNA SIGNAL PROCESSING SYSTEM AND METHOD**

MEHRANTENNEN-SIGNALVERARBEITUNGSSYSTEM UND -VERFAHREN

SYSTÈME ET PROCÉDÉ DE TRAITEMENT DE SIGNAUX À ANTENNES MULTIPLES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.01.2009 CN 200910076213**

(43) Date of publication of application:
**12.10.2011 Bulletin 2011/41**

(73) Proprietor: **ZTE Corporation**
**Shenzhen, Guangdong 518057 (CN)**

(72) Inventors:
• **SUN, Yunfeng**
  **Guangdong 518057 (CN)**
• **JIANG, Jing**
  **Guangdong 518057 (CN)**
• **LI, Feng**
  **Guangdong 518057 (CN)**
• **TIAN, Kaibo**
  **Guangdong 518057 (CN)**
• **YU, Hui**
  **Guangdong 518057 (CN)**

(74) Representative: **Hutchinson, Glenn Stanley**
**HGF Limited**
**Fountain Precinct**
**Balm Green**
**Sheffield S1 2JA (GB)**

(56) References cited:
EP-A1- 1 944 903          WO-A1-2007/095102
WO-A1-2008/064819     CN-A- 101 273 599
US-A1- 2008 037 413     US-A1- 2008 049 709

• "Front matter: Contents, Preface" In: Pierre LESCUYER, Thierry LUCIDARME: "EVOLVED PACKET SYSTEM (EPS) - THE LTE AND SAE EVOLUTION OF 3G UMTS", 29 February 2008 (2008-02-29), John Wiley & Sons, Ltd, West Sussex, England, XP002723398, ISBN: 978-0-470-05976-0 pages i-xii, DOI: 10.1002/9780470723678.fmatter, * the whole document *
• "chapter 3 - "Physical Layer of E-UTRAN"" In: Pierre LESCUYER, Thierry LUCIDARME: "EVOLVED PACKET SYSTEM (EPS) - THE LTE AND SAE EVOLUTION OF 3G UMTS", 29 February 2008 (2008-02-29), John Wiley & Sons, Ltd, West Sussex, England, XP002723399, ISBN: 978-0-470-05976-0 pages 75-170, DOI: 10.1002/9780470723678.ch3, * pages 85-88 * * pages 101-103 * * page 130 * * pages 132-134 * * pages 156-158 * * pages 160-161 *
• HYUNG G MYUNG ET AL: "Single carrier FDMA for uplink wireless transmission", IEEE VEHICULAR TECHNOLOGY MAGAZINE, IEEE, US, vol. 1, no. 3, 1 September 2006 (2006-09-01), pages 30-38, XP011165321, ISSN: 1556-6072, DOI: 10.1109/MVT.2006.307304
• GILLIAN HUANG ET AL: "Impact of Radio Resource Allocation and Pulse Shaping on Papr of SC-FDMA Signals", IEEE INTERNATIONAL SYMPOSIUM ON PERSONAL, INDOOR AND MOBILE RADIO COMMUNICATIONS. PIMRC, IEEE; PI, XX, 1 September 2007 (2007-09-01), pages 1-5, XP031168375, ISBN: 978-1-4244-1143-6

EP 2 375 579 B1

- LUCENT TECHNOLOGIES: "Precoded FDM Reference Signals for SC-FDMA", 3GPP DRAFT; R1-061876, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Cannes, France; 20060620, 20 June 2006 (2006-06-20), XP050111692, [retrieved on 2006-06-20]

## Description

## Field of the Invention

The present invention relates to a multiple-antenna signal processing technology, and in particular to a multiple-antenna signal processing system and method in the uplink Single Carrier-Frequency Division Multiple Access (SC-FDMA).

## Background of the Invention

In an Orthogonal Frequency Division Multiplexing (OFDM) system, particularly in the case of uplink, the Peak Average Power Ratio (PAPR) is an important factor restricting the performance of the system. Therefore, in a system such as a LTE system, the uplinks use the SC-FDMA as a multiple access mode, so as to reduce the restriction on the performance of the system caused by the PAPR, however, the PAPR still restricts the performance of the system inevitably, which is a factor that must be considered in system designing. Therefore, the influence on the PAPR needs to be considered in various technologies in the system such as the improved LTE_A system. The multiple-antenna signal processing technology is the main technology in the new generation communication system, and different schemes have different PAPR characteristics.

Specifically, a current multiple-antenna signal processing system based on SC-FDMA includes: a Discrete Fourier Transform (DFT) processing unit, a multiple-antenna processing and resource element mapping unit, and an Inverse Fast Fourier Transform (IFFT) processing unit, wherein the DFT processing unit is connected with the multiple-antenna processing and resource element mapping unit, the multiple-antenna processing and resource element mapping unit is connected with the IFFT processing unit. By analyzing the system, it can be concluded that in the process that the SC-FDMA system transmits a signal, the influence on the PAPR by the multiple-antenna process is not considered; the reason is that: the processing of data between the DFT processing unit and the IFFT processing unit generally cannot change the linearity of the data, however, after the multiple-antenna processing and resource element mapping unit which is used in the multiple-antenna process is added between the two processing units, since the multiple-antenna processing is often a non-linear processing on the data, the linearity of the data is broken and the PAPR characteristic of the data in the SC-FDMA system is changed.

As a multiple-antenna implementation mode, the diversity technology is a transmission mode that must be considered in the current multiple-antenna signal processing system when the channel condition is poor, or when important information such as control signalling is transmitted. The Alamouti diversity scheme, which is the most common diversity scheme, is a simple space time block encoding diversity scheme in case of two antenna ports, and it can obtain a maximum diversity gain when PAPR problems are not considered, but since a non-linear processing on the data is performed in the multiple-antenna process, which affect the PAPR characteristic. For the multiplexing technology, the most commonly used method is pre-coding in which, firstly, the data in different data streams of the frequency domain need to be weighted, then the IFFT processing is performed. That is, the output data after the DFT processing are also non-linearly processed in the multiple-antenna processing, and then are subjected to IFFT processing unit, which will also affect the PAPR characteristic. In a word, both diversity technology and the multiplexing technology relate to the non-linear processing on the data, that is, after adding the multiple-antenna process between the DFT processing and the IFFT processing, the linearity of the data will be destroyed, thus the PAPR characteristic is influenced.

In current solution, a linear processing is performed on data after the DFT processing, and adopting the multiple-antenna processing technologies based on the linear processing. With regard to the diversity technology, the linear processing technologies include: a diversity technology of the Cyclic Delay Diversity (CDD), a diversity technology of the Frequency switch transmit diversity (FSTD), and a diversity technology of the Space Frequency Block Code II (SFBCII); and with regard to the multiplexing technology, the linear processing technologies include a multiplexing technology of switching antennas among different data streams in different time slot. However, though the current solutions will not destroy the linearity of the data and affect the PAPR characteristic, it will seriously influence the diversity gain and the multiplexing gain, so that the diversity gain and the multiplexing gain are low.

"Chapter 3 - Physical Layer of E-UTRAN", Pierre Lescuyer, Thierry Lucidarme, "Evolved Packet System (EPS) - The LTE and SAE evolution of 3G UMTS (29 February 2008)", pages 75 to 170, discloses a method for SC-FDMA.

US patent document, US2008/0049709A1 discloses a method for multiple-input multiple-output schedule using pre-coding and feedback in a wireless communication.

US patent document, US2008/0037413A1 discloses a method and apparatus for improving power efficiency of a UE.

## Summary of the Invention

In view of the above, the main object of the present invention is to provide a multiple-antenna signal processing system and method, so as to obtain a larger diversity gain and multiplexing gain, and meanwhile enable the uplink of the system to maintain a relative low PAPR.

In order to achieve the above object, the technology solution of the present invention is realized as follows.

A multiple-antenna signal processing system, the system comprises:

a Discrete Fourier Transform DFT processing unit, a multiple-antenna processing and resource element mapping unit, and an Inverse Fast Fourier Transform, IFFT, processing unit, characterized in that the system further comprises a pre-mapping processing unit, which is configured to perform a mapping on input data stream(s) based on a current multiple-antenna processing mode, so as to realize the pre-mapping processing, and outputs the pre-mapped data stream(s) to the DFT processing unit, wherein, the pre-mapping processing unit is configured to map N input data streams to M layers, both N and M are integers which are greater than or equal to 1, the multiple-antenna processing mode is divided into two cases which are diversity and multiplexing, wherein in case of diversity, N=1, and with regard to Cyclic Delay Diversity mode, M being equal to 1, no pre-mapping processing being performed; and with regard to Frequency switch transmit diversity mode, M being equal to the number of the antennas, in case of multiplexing, N > 1, and N being equal to M in case that the number of the antennas is equal to the number of the input data streams to be transmitted, and combining the diversity and the multiplexing and determining whether N equals to M based on the mode adopted by the diversity in case that the input data streams is less than the number of the antennas.

In the above, the described pre-mapping processing unit is further configured to realize the mapping by using different mapping modes; wherein

the described mapping modes include one of the following: mapping mode of performing a Cyclic Delay Diversity (CDD); mapping mode of weighting with cycle phase; mapping mode of weighting with normalized weighting vector on different data streams; mapping mode of mapping one or more modulation symbols in the data stream(s) to multiple layers; mapping mode of performing encoding processing on the data stream(s); mapping mode of performing exchange processing among the data streams, wherein the mapping mode of performing exchange processing among the data streams includes one of the following: mapping mode of performing switch processing among the data streams and mapping mode of performing interleaving processing among the data streams.

A multiple-antenna signal processing method, characterized in that the method comprises a step of performing a mapping on input data stream(s) based on a current multiple-antenna processing mode, so as to realize a pre-mapping processing, and a step of performing a DFT processing after the input data stream(s) pre-mapping performed, wherein, a pre-mapping processing unit is configured to map N input data streams to M layers, both N and M are integers which are greater than or equal to 1, the multiple-antenna processing mode is divided into two cases which are diversity and multiplexing, wherein in case of diversity, N = 1, and with regard to Cyclic Delay Diversity, CDD, mode, M being equal to 1, no pre-mapping processing being performed; and with regard to Frequency switch transmit diversity, FSTD, mode, M being equal to the number of the antennas, in case of multiplexing, N > 1, and N being equal to M in case that the number of the antennas is equal to the number of the input data streams to be transmitted, and combining the diversity and the multiplexing and determining whether N equals to M based on the mode adopted by the diversity in case that the input data streams is less than the number of the antennas.

In the above, the described mapping modes used when performing a mapping include one of the following: mapping mode of performing a CDD processing; mapping mode of weighting with cycle phase; mapping mode of weighting on different data streams with normalized weighting vector; mapping mode of mapping one or more modulation symbols in the data stream(s) to multiple layers; mapping mode of performing encoding processing on the data stream(s), and mapping mode of performing exchange processing among the data streams..

In the above, the described mapping mode of performing exchange processing among the data streams includes: mapping mode used only when there are multiple data streams; the described mapping mode of performing exchange processing among the data streams includes one of the following: mapping mode of performing switch processing among the data streams and mapping mode of performing interleaving processing among the data streams.

In the above, the described mapping mode of performing switch processing among the data streams specifically includes: performing switch processing among the data streams every at least two data symbols; in the above, the described mapping mode of performing interleaving processing among the data streams specifically is: realizing the interleaving processing among the data streams by an interleaver.

In the above, in the case of diversity, the described mapping mode of performing encoding processing on the data stream(s) specifically is:

performing a serial-parallel conversion on the data symbols of one received data stream according to the odd position and even position of the data symbols to obtain at least two sub-datastreams; and the described sub-datastreams being transmitted respectively by different antennas after the DFT processing is performed on the sub-data streams respectively.

In the above, in the case of multiplexing, the described mapping mode of performing exchange processing among the data streams is: the mapping mode for performing a switch processing among the data streams; wherein

the above mapping mode of performing switch processing among the data streams specifically is:

performing an interlaced switch processing on at least two data streams received which are encoded and modulated independently, and performing position exchange between the data symbols in the odd positions of the first data stream and the data symbols in the odd positions of the other data streams; or

performing position exchange between the data symbols in the even positions of the first data stream and the data symbols in the even positions of the other data streams; or

performing position exchange between the data symbols in the odd positions of the first data stream and the data symbols in the even positions of the other data streams; or

performing position exchange between the data symbols in the even positions of the first data stream and the data symbols in the odd positions of the other data streams; or

segmentwise performing position exchange between the data symbols in every (m+1) positions of the first data stream and the data symbols in every (m+1) positions of a second data stream, wherein m is an integer which is greater than 1.

As to the system according to the present invention, the pre-mapping processing unit is added before the DFT processing unit of the current system, the pre-mapping processing unit is used to map the input data streams according to the current multiple-antenna processing mode, so as to realize the pre-mapping processing, and output the data streams pre-mapped to the DFT processing unit.

With regard to the current system, after the multiple-antenna processing and resource element mapping unit is added between the DFT processing unit and the IFFT processing unit, the multiple-antenna processing and resource element mapping unit used in the multiple-antenna process will perform a non-linear processing on the data, which will directly lead to a destroy of the linearity of the data, and affect the PAPR characteristic. With regard to the present invention, the input data streams are mapped in advance by the pre-mapping processing unit according to the processing mode of the current multiple-antenna processing; since the processing mode of the current multiple-antenna processing satisfies the multiple-antenna process of the subsequent multiple-antenna processing and resource element mapping unit, the destroy of the linearity of the data can be minimized, and the PAPR characteristic will not be seriously affected.

Specifically, when the IFFT processing is performed, all the data input into every antenna of the IFFT processing unit maintain the linearity of the data which has been processed and output by the DFT processing unit, that is, between the DFT processing unit and the IFFT processing unit, the processing on the data generally does not change the linearity of the data, therefore, after being processed by the IFFT processing unit, the data can be ensured to maintain the PAPR characteristic of the data before the DFT processing. In the present invention, first the pre-mapping processing is performed before the DFT processing, then the multiple-antenna processing and the IFFT processing are performed. On one hand, by the pre-mapping processing, a part of the diversity gain can be obtained without seriously affecting the diversity gain; on the other hand, since the pre-mapping processing is performed towards the processing mode of the current multiple-antenna processing, the linearity of the data will not be destroyed in the subsequent multiple-antenna processing, which reduces the influence on the PAPR characteristic.

Moreover, in the multiplexing mode, the pre-mapping processing of performing position exchange on multiple data streams enable the data streams to experience the similar channel fading, so as to avoid the influence resulted from the deep fading of the channel. From the perspective of the final emulation result, a larger multiplexing gain can be obtained after the exchange processing. In a word, in the SC-FDMA system, by adopting the present invention, a larger diversity gain and multiplexing gain can be obtained, simultaneously, the system may have a lower PAPR, so as to satisfy the demand of power amplification.

**Brief Description of the Drawings**

Drawings illustrated here are used to provide a further understanding of the present invention and form a part of the specification; the exemplary embodiments of the present invention and the description thereof are used to explain the present invention without unduly limiting the present invention. Wherein:

Fig.1 is a composite structure schematic diagram of the multiple-antenna signal processing system according to the embodiments of the present invention;

Fig.2 is a composite structure schematic diagram of the multiple-antenna signal processing system performing a transmitting processing at the transmitting end according to the embodiments of the present invention;

Fig.3 is a composite structure schematic diagram of the multiple-antenna signal processing system performing a receiving processing at the receiving end according to the embodiments of the present invention, which is corresponding to Fig.2;

Fig.4 is a schematic diagram of the implementation process of the multiple-antenna signal processing method according to the embodiments of the present invention;

Fig.5 is a composite structure schematic diagram of the corresponding system which is used in the multiple-antenna signal processing method in the case of multiplexing according to the embodiments of the present invention;

Fig.6 is a schematic diagram of comparing the signals before and after the pre-mapping processing according to the embodiments of the present invention, which is corresponding to Fig.5;

Fig.7 is a composite structure schematic diagram of the corresponding system which is used in the multiple-antenna signal processing method in the case of diversity according to the embodiments of the present invention;

Fig.8 is a schematic diagram of comparing the signals before and after the pre-mapping processing according to the embodiments of the present invention, which is corresponding to Fig.7.

**Detailed Description of the Embodiments**

Input data streams are mapped according to the processing mode of a current multiple-antenna processing, so as to realize the pre-mapping process; and the data stream which has been performed a pre-mapping processing is outputted to the DFT processing unit; by the above processing, while a larger diversity gain and multiplexing gain is obtained, the system can have a lower PAPR, so as to satisfy the demand on the power amplification.

The realization of the technology solution is further described in detail in connection with the drawings hereinafter.

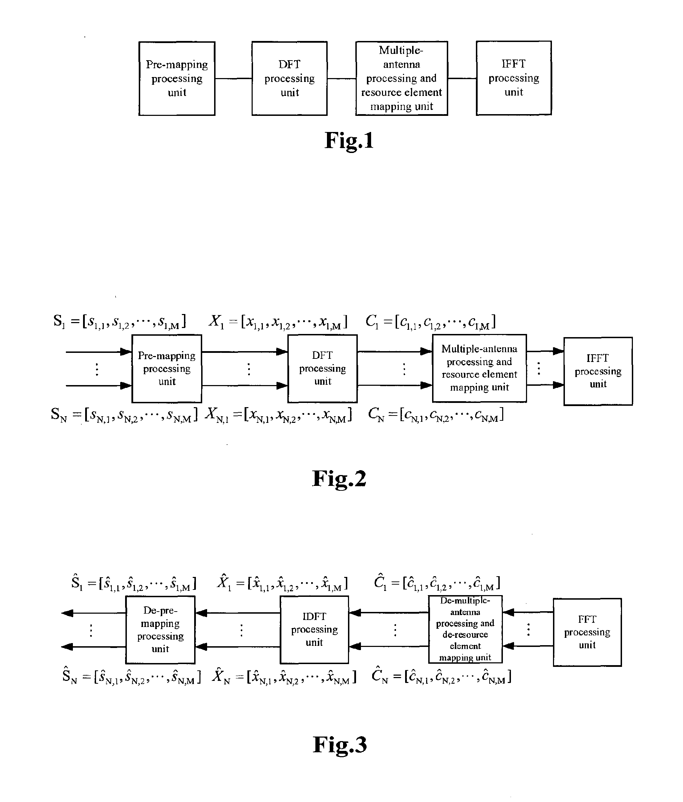

Fig.1 is a composite structure schematic diagram of the multiple-antenna signal processing system according to the embodiments of the present invention. As shown in Fig.1, the multiple-antenna signal processing system includes: a pre-mapping processing unit, a DFT processing unit, a multiple-antenna processing and resource element mapping unit, and an IFFT processing unit. Wherein the DFT processing unit, the multiple-antenna processing and resource element mapping unit, and the IFFT processing unit are known in the prior art, and will not be detailed herein. The function of the pre-mapping processing unit will be described below in details. The pre-mapping processing unit is configured to map the input data stream(s) according to the current multiple-antenna processing mode, so as to realize the pre-mapping, and outputs the data stream(s) which has been pre-mapped to the DFT processing unit, so as to execute a DFT processing.

Herein, the pre-mapping processing unit is also configured to map the N input data streams to M layers; the value of M is determined by the current multiple-antenna processing mode; wherein both N and M are integers which are greater than or equal to 1. The number of mapped layers is determined by the current multiple-antenna processing mode, and the current multiple-antenna processing mode often relates to the number of the antenna.

In the above, the multiple-antenna processing mode is mainly divided into two cases, diversity and multiplexing. With regard to the case of diversity, herein N=1, the common diversity modes include: the FSTD mode, the space frequency block code (SFBC)/ space time block code (STBC) mode, the CDD mode, the Phase shift Diversity (PSD) mode and so on. For example, with regard to the CDD mode, there is no need to perform a pre-mapping processing before the DFT processing, that is, no matter what the number of the antennas is, M can be equal to 1, that is because that the CDD mode will not affect the PAPR. However, with regard to the FSTD mode, if the operation is performed after the DFT processing, the PAPR will be affected; therefore, the pre-mapping processing needs to be performed before the DFT processing, herein M is required to be the number of the antennas; the previous data streams can be serial-parallel converted to M layers for the DFT processing respectively, then each of the outputs processed by the DFT is mapped to various antennae for transmission by interpolating zero, which can refer to the situation shown in Example 3. With regard to the case of the multi-data stream multiplexing, herein N>1, in order to obtain greater diversity gain, a certain processing can be made; if the number of the antennas is equal to the number of the data streams to be transmitted, reference can be made in Example 1, herein N=M, but the pre-mapping processing is performed before the DFT processing to obtain a space diversity gain; if the number of the data streams is less than the number of the antennas, the diversity and the multiplexing can be combined, in this case, whether the N equals to the M depends on the mode adopted by the diversity. With regard to the multiplexing, a type of precoding mode is included for ensuring that the PAPR will not be influenced while the precoding characteristic is maintained.

Herein, the pre-mapping processing unit is also configured to realize the mapping by using different mapping modes. The mapping modes include one of the following: mapping mode of performing a CDD; mapping mode of weighting with cycle phase; mapping mode of weighting with normalized weighting vector on different data streams; mapping mode of mapping one or more modulation symbols in the data stream(s) to multiple layers; mapping mode of performing encoding processing on the data stream(s); mapping mode of performing exchange processing among the data streams.

In the above, the mapping mode of performing exchange processing among the data streams includes: mapping mode of performing switch processing among the data streams and mapping mode of performing interleaving processing among the data streams.

It should be noted that: the system also includes, in an addition to the pre-mapping processing unit at the transmitting end of the system, a de-pre-mapping processing unit at a receiving end. The de-pre-mapping processing unit is configured to perform de-pre-mapping processing, the process of the de-pre-mapping processing is the inverse process of the pre-mapping processing at the transmitting end of the system.

Fig.2 is a composite structure schematic diagram of the multiple-antenna signal processing system performing a transmitting processing at the transmitting end according to the embodiments of the present invention. As shown in Fig.2, the system comprises: a pre-mapping processing unit, a DFT processing unit, a multiple-antenna processing and resource element mapping unit and an FFT unit; wherein the pre-mapping processing unit performs the pre-mapping processing on the input data streams $S_1,...,S_N$, and outputs the data streams $X_1,...,X_N$, and then these output data streams will be input to the DFT processing unit; the DFT processing unit outputs data streams $C_1,...,C_N$; the data streams processed by the multiple-antenna processing and resource element mapping unit are respectively corresponding to the antenna port 1, ..., antenna port N, and input to the IFFT processing unit.

Fig.3 is a composite structure schematic diagram of the multiple-antenna signal processing system performing a receiving processing at the receiving end according to the embodiments of the present invention, which is corresponding to Fig.2. As shown in Fig.3, the system comprises: a de-pre-mapping processing unit, an Inverse Discrete Fourier transform (IDFT) processing unit, a de-multiple-antenna processing and de-resource element mapping unit, and a Fast Fourier transform (FFT) processing unit. The FFT processing unit at the receiving end receives the data streams sent from the transmitting end, and performs an inverse process of IFFT processing unit on the data streams received from antenna port 1, ..., antenna port N correspondingly; the de-multiple-antenna processing and de-resource element mapping unit outputs data streams $\hat{C}_1,..., \hat{C}_N$ to the IDFT processing unit after performing the inverse process of the multiple-antenna processing and resource element mapping unit; the IDFT processing unit outputs data streams $\hat{X}_1,..., \hat{X}_N$ to the de-pre-mapping processing unit after performing the inverse process of the DFT processing unit; and the de-pre-mapping processing unit outputs data streams $\hat{S}_1,..., \hat{S}_N$ after performing the inverse process of the pre-mapping processing unit.

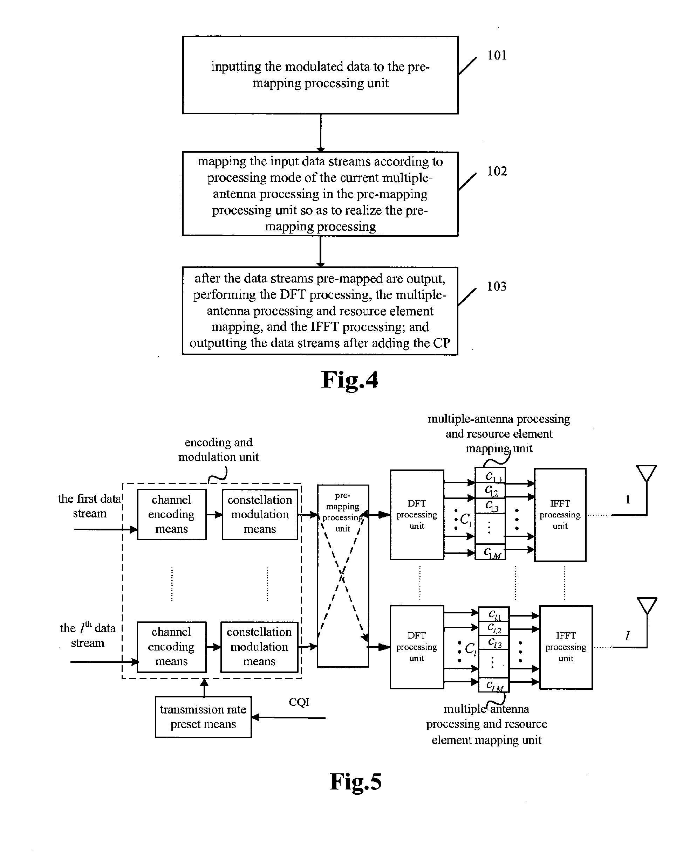

As shown in Fig.4, a multiple-antenna signal processing method is also provided by the embodiments of the present invention, the method includes the following steps.

Step 101, modulated data stream(s) is/are input to the pre-mapping processing unit.

Step 102, the input data stream(s) is/are mapped in the pre-mapping processing unit according to processing mode of a current multiple-antenna processing, so as to realize a pre-mapping processing.

Herein, the process of step 102 specifically is: mapping the N input data streams to M layers; wherein the value of M is determined by the processing mode of the current multiple-antenna processing, and both N and M are integers which are greater than or equal to 1.

Herein, the mapping modes adopted for the mapping processing in the pre-mapping processing unit include one of the following: mapping mode of performing a CDD; mapping mode of weighting with cycle phase; a mapping mode of weighting with normalized weighting vector on the different data streams; mapping mode of mapping one or more modulation symbols of data streams to multiple layers; mapping mode of performing encoding processing on the data stream(s); mapping mode of performing exchange processing among the data streams. Wherein the mapping mode of performing exchange processing among the data streams is the mapping mode used when there are a plurality of data streams, and the mapping mode of performing exchange processing among the data streams includes one of the following: mapping mode of performing switch processing among the data streams and mapping mode of performing interleaving processing among the data streams.

Directed towards the mapping mode of performing switch processing among the data streams, the mapping mode specifically is: performing one switch processing among the data streams every at least two data symbols.

As to the mapping mode for performing interleaving processing between data streams, the mapping mode specifically is: realizing the interleaving processing among the data streams by an interleaver.

In the above, as to the interleaver, different interleaver designs result in different interleaving processing modes. The above switch processing among the data streams can be considered as the simplest interleaving processing. For example, an interleaving processing can include: after being performed the SP conversion, the data streams are sent to the interleaver for interleaving, and the interleaved data are divided into two parts for processing; or, two data streams are respectively filled from the top left corner and lower right corner of the interleaving matrix, when the matrix is filled up, the data streams are taken out from the left and right sides by column.

Herein, in the case of diversity and multiplexing, the pre-mapping processing is generally performed by different mapping modes. In the case of diversity, the mapping mode for performing an encoding processing on the data streams is adopted. The mapping mode for performing an encoding processing on the data streams specifically is: performing the serial-parallel conversion on the data symbols of a received data stream according to the odd position and even position of the data symbols to obtain two or more sub-data streams; the two or more sub-data streams are mapped to different resource elements and sent respectively by different antennas after the DFT processing is performed.

In the case of multiplexing, the mapping mode for performing a switch processing among the data streams is adopted. A first implementation solution of the mapping mode specifically is: performing an interlaced switch processing on the received two or more data streams which are encoded and modulated independently, and performing position exchange between the data symbols in the odd positions of the first data stream and the data symbols in the odd positions of other data streams. A second implementation solution of the mapping mode specifically is: performing an interlaced switch processing on the received two or more data streams which are encoded and modulated independently, and performing position exchange between the data symbols in the even positions of the first data stream and the data symbols in the even positions of other data streams. A third implementation solution of the mapping mode specifically is: performing an interlaced switch processing on the received two or more data streams which are encoded and modulated independently, and performing position exchange between the data symbols in the odd positions of the first data stream and the data symbols in the even positions of other data streams. A fourth implementation solution of the mapping mode specifically is: performing an interlaced switch processing on the received two or more data streams which are encoded and modulated independently, and performing position exchange between the data symbols in the even positions of the first data stream and the data symbols in the odd positions of other data streams.

The above four implementation solutions perform the exchange in the mode of discrete data symbols. The realization of mapping modes can also include: exchanging in the mode of continuous data symbols, which specifically is: performing an interlaced switch processing on the received two or more data streams which are encoded and modulated independently, and segment wise performing position exchange between the data symbols in every (m+1) positions of the first data stream and the data symbols in every (m+1) positions of the second data stream, wherein m is an integer which is greater than 1.

Step 103, after the data streams which had been pre-mapped are output, the data streams are performed the DFT processing, the multiple-antenna processing and resource element mapping, and the IFFT processing; and then the data streams is outputted after being added with the CP.

It should be noted that, the method may also include that: a de-pre-mapping processing performed at the receiving end in an addition to the pre-mapping processing at the transmitting end, and the process of the de-pre-mapping processing is an inverse process of the pre-mapping processing at the transmitting end.

The multiple-antenna signal processing method at the transmitting end of the system can include the following steps.

Step 201, the transmitting side first selects an encoding rate and a modulation mode for the data of different data streams based on the feedback channel information according to the prior processing mode, and respectively performs channel encoding and modulation processing.

Step 202, for the data of different data streams, the input data streams are mapped according to the current multiple-antenna processing mode in the pre-mapping processing unit, a DFT processing is performed after the pre-mapping processing is carried out.

Step 203, the multiple-antenna processing is performed based on the processing mode of the pre-mapping processing unit, performing according to the prior processing mode; the data streams are respectively mapped to the corresponding resource elements; then, the IFFT processing is performed; and the data streams are transmitted to the receiving end via different antennas after being added with the CP.

The multiple-antenna signal processing method executed by the receiving end of the system is the inverse process corresponding to the transmitting end, it includes the following steps.

Step 301, the receiving side first performs a remove the CP, FFT processing, de-resource element mapping and de-multiple-antenna processing according to the prior processing mode, then, performs the IDFT processing.

Step 302, the de-pre-mapping processing is performed; the de-pre-mapping processing is the inverse process of the pre-mapping processing at the transmitting end.

Step 303, the demodulation and the channel decoding are performed according to the prior processing mode, and the transmitted data is restored.

The mapping mode involved in the process of Step 102 will be described in details hereinafter by means of the specific examples.

Example 1 is the mapping mode adopted by the method of the embodiment of the present invention in the case of multiplexing. The adopted system is shown in Fig.5, and in the figure, we assume $l$=2. The system shown in Fig.5 includes: an encoding and modulation unit, a pre-mapping processing unit, a DFT processing unit, a multiple-antenna processing and resource element mapping unit, and an IFFT processing unit. Wherein the part in the dotted line is the encoding and modulation unit, which includes a channel encoding means and a constellation modulation means; the Channel Quality Indication (CQI) determines the encoding rate and the modulation mode of the encoding and modulation unit.

The mapping mode used in the example is the mapping mode for performing a switch processing among the data streams. The present example is directed towards the case of the multiplexing of two data streams, taking the dual code word as an example, at the transmitting end, the signals of the two data streams to be sent are expressed as: $S_1 = [s_{1,1}, s_{1,2}, \cdots, s_{1,M}]$, $S_2 = [s_{2,1}, s_{2,2} \cdots, s_{2,M}]$; then, the mapping mode for performing the switch processing among the data streams is used for the two data streams, that is, the switch processing of the position is performed on the two data streams, the processed signals are expressed as $X_1 = [x_{1,1}, x_{1,2}, \cdots, x_{1,M}]$, $X_2 = [x_{2,1}, x_{2,2}, \cdots, x_{2,M}]$; then, the DFT processing is performed respectively on the $X_1$ and the $X_2$, the obtained signals are expressed as $C_1 = [c_{1,1}, c_{1,2}, \cdots, c_{1,M}]$ and $C_2 = [c_{2,1}, c_{2,2}, \cdots, c_{2,M}]$; finally, the multiplexing processing and the resource elements mapping are performed to respectively map $C_1$ and $C_2$ to the corresponding resource elements; $C_1$ and $C_2$ are transmitted by different antennas after being performed with the IFFT processing and being added with the CP.

In the above, $X_1 = [s_{1,1}, s_{2,2}, s_{1,3}, s_{2,4} \cdots, s_{1,M}]$; $X_2 = [s_{2,1}, s_{1,2}, s_{2,3}, s_{1,4} \cdots, s_{2,M}]$, it can be concluded that, after the pre-mapping processing is performed by adopting the mapping mode for performing the switch processing among the data streams, the data of the two data streams are respectively distributed to the data streams corresponding to different DFT processing units. The realization solution of the mapping mode actually is: performing an interlaced switch processing on the two received data streams which are encoded and modulated independently, and performing position exchange between the data symbols in the even positions of the first data stream and the data symbols in the even positions of the second data stream. Then, the inverse process at the corresponding receiving end includes that: the receiving end removes the CP, performs the FFT processing, the de-resource element mapping and de-multiple-antenna processing, and the DFT processing; wherein after performing the de-DFT processing, $\hat{X}_1 = [\hat{s}_{1,1}, \hat{s}_{2,2}, \hat{s}_{1,3}, \hat{s}_{2,4} \cdots, \hat{s}_{1,M}]$ and $\hat{X}_2 = [\hat{s}_{2,1}, \hat{s}_{1,2}, \hat{s}_{2,3}, \hat{s}_{1,4} \cdots, \hat{s}_{1,M}]$ are restored; then the de-pre-mapping processing is performed to obtain $\hat{S}_1 = [\hat{s}_{1,1}, \hat{s}_{1,2}, \cdots, \hat{s}_{1,M}]$ and $S_2 = [\hat{s}_{2,1}, \hat{s}_{2,2}, \cdots, \hat{s}_{2,M}]$.

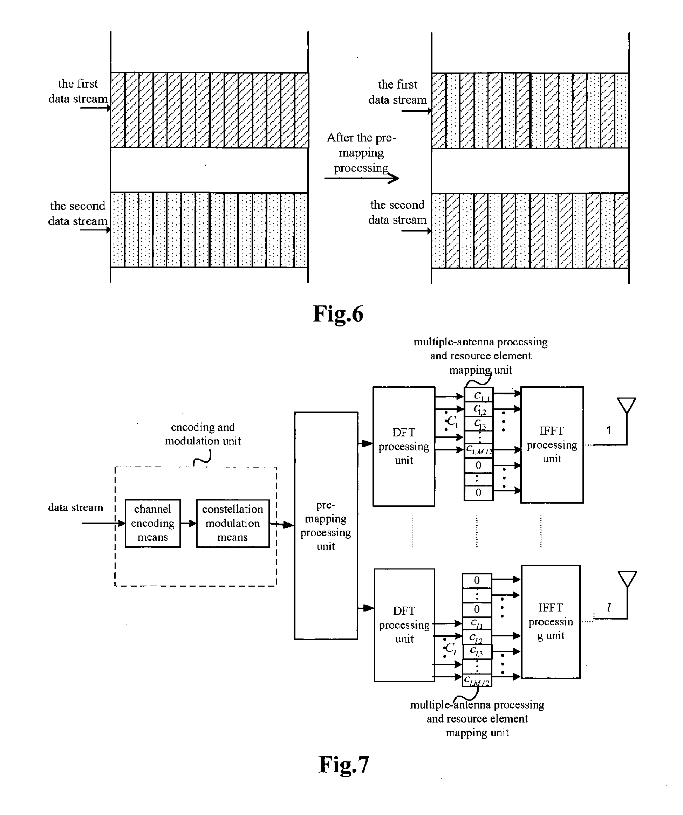

The schematic diagram of comparing the signals before and after the pre-mapping processing corresponding to Fig.5 is shown in Fig.6. In Fig.6, the data of the first data stream are indicated by the part filled with oblique lines; the data of the second data stream are indicated by the part filled with dots. It can be directly concluded from Fig.6 that: on the one hand, each data of the two data streams is evenly distributed to different antennas for transmitting, so as to obtain a space diversity gain; on the other hand, the PAPR is between the PAPRs of the two data streams, specifically, in the case that the modulation modes of the two data streams are different, if the pre-mapping processing is not performed, the PAPRs of the two data streams are corresponding to respective modulation mode; if the pre-mapping processing is performed, by the interlacing between the two data streams, the PAPRs can have consistency, and are between the PAPRs of the two original data streams; and based on above two aspects, the solution in the example is beneficial for the uniform design of the power amplification. It should be noted that although the number of the transmitting antenna is same with the number of the data streams to be transmitted in the present embodiment, the number of the transmitting antenna can be larger than the number of the data streams in practical application.

Example 2: in the case of single data stream, the mapping mode for performing an encoding processing on the data stream is adopted. The signal of the data stream to be sent is expressed as: $S = [s_1, s_2, \cdots, s_N]$, S is performed with a serial-parallel conversion to obtain two sub-data streams $X_1 = [s_1, s_3, \cdots, s_{N-1}]$, $X_2 = [s_2, s_4, \cdots, s_N]$. When the N is an odd number, it will be changed to be an even number by a manner of extension or adding 0; then the data streams are performed with the DFT processing, the multiplexing processing, the multiple-antenna processing and the resource element mapping processing, the IFFT processing, and being added with the CP, and then transmitted by different antennas.

The multiplexing processing in Example 1 and Example 2 is the multiplexing processing of the multiple-antenna processing, for example, the Block Layered Space Time code (BLAST) multiplexing can be performed, or when the number of the antenna is larger, the multiplexing processing and the diversity processing (e.g., CDD mode) which does not affect the linearity relation can be combined together. Herein, when the number of the antenna ports is larger than the number of the sub-data streams pre-mapped, before adding the CP to the above data, the CDD mode, or the mode of switching antenna at different OFDM symbol time (e.g., the mode of switching antenna at the time which is an integral times of the OFDM symbol) may be used to correspond the data streams to different antenna ports. That is, the processing based on the CDD mode is performed after the IFFT processing and before adding the CP. When the number of the antennas is larger than the number of the data streams, the multiplexing processing and the diversity processing (e.g., CDD mode) which does not affect the linearity relation can be combined together. Wherein both the CDD mode, and the mode of switching antenna at different OFDM symbol time (e.g., the mode of switching antenna at the time which is an integral times of the OFDM symbol) are processing modes which do not affect the linearity relation.

Example 3: the mapping mode adopted by the method of the embodiment of the present invention in the case of diversity is similar to that in Example 2; however compare Example 2 with Example 3, Example 2 is a mode for multiplexing processing; though there is only one process or two data streams are output from the same encoder, but two or more modulated data are transmitted in every time-frequency resource element, for example, there are two modulated data in Example 2; however, the present example shows the mode of diversity processing, the output of an encoder or a process is not divided into two sub-data streams for transmitting, and only one modulated data is transmitted in each of the time-frequency resource elements.

The system adopted in the present example is shown in Fig.7 and comprises: an encoding and modulation unit, a pre-mapping processing unit, a DFT processing unit, a multiple-antenna processing and resource element mapping unit, and an IFFT processing unit. Wherein the part in the dotted line is the encoding and modulation unit, which includes a channel encoding means and a constellation modulation means, and the pre-mapping processing unit performs the pre-mapping processing by adopting a serial-parallel conversion.

The mapping mode adopted in the present example is: the mapping mode of performing an encoding processing (i.e. serial-parallel conversion) on the data streams. The present example is directed towards the case of one data stream, such as single code word, wherein, at the transmitting end, the signal of the data stream to be sent is expressed as: $S = [s_1, s_2, \cdots, s_M]$; then, the mapping mode for performing an encoding processing is used for the data stream, the format of the processed signal is expressed as $X_1 = [x_{1,1}, x_{1,2}, \cdots, x_{1,M}]$, $X_2 = [x_{2,1}, x_{2,2}, \cdots, x_{2,M}]$ ; then, the DFT processing is performed respectively on the $X_1$ and the $X_2$ to obtain the signals expressed as $C_1 = [c_{1,1}, c_{1,2}, \cdots, c_{1,M/2}]$ and $C_2 = [c_{2,1}, c_{2,2}, \cdots, c_{2,M/2}]$; then, the multiple-antenna processing and the resource element mapping are performed, which respectively maps $C_1$ and $C_2$ to the corresponding position of the resource elements; during the mapping, the outputs of different DFT processing units are mapped to different positions of the resource elements by block, meanwhile, at the position of resource elements occupied by the other DFT processing unit, zero power data will be interpolated by current DFT output; finally, the signals are transmitted via different antennas after being performed the IFFT processing and being added with the CP. Herein, when the number of the antenna ports is more than the number of the sub-datastreams, the data can be further corresponded to different antenna ports by the CDD mode before adding the CP to the above data.

In the above, $X_1 = [s_1, s_3, \cdots, s_{M-1}]$; $X_2 = [s_2, s_4 \cdots, s_M]$, that is, after the pre-mapping processing, the data corresponding to one DFT is alternatively distributed to the data streams corresponding to two DFT processing units. Herein, the realization solution of the mapping mode actually is: performing a serial-parallel conversion on the data symbols of a received data stream according to the odd position and even position of the data symbols to obtain two sub-data streams; and the two sub-data streams are sent respectively by different antennas after being performed the DFT processing.

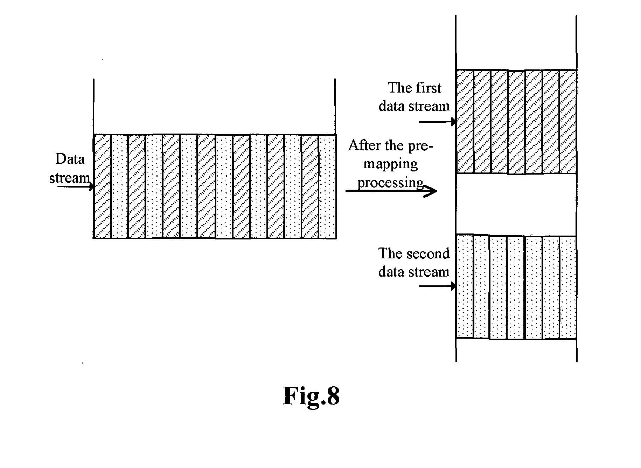

A schematic diagram of comparing the signals before and after the pre-mapping processing which is corresponding to Fig.7 is shown in Fig.8. In Fig.8, the data of the first layer is indicated by the part filled with oblique lines; the data of the second layer is indicated by the part filled with dots. It can be directly concluded from Fig.7 and Fig.8 that the gain can be obtained by transmitting the adjacent data respectively by different antennas. Each data of the data stream is evenly distributed to different antennas for transmitting, so as to obtain the space diversity gain.

Example 4, the mapping mode adopted by the method provided by the embodiment of the present invention is the mapping mode of weighting on different data streams with normalized weighting vector

Taking two data streams as an example, the signals of the two data streams to be sent are expressed as: $S_1 = [s_{1,1}, s_{1,2}, \cdots s_{1,M}]$, $S_2 = [s_{2,1}, s_{2,2}, \cdots, s_{2,M}]$; both of which are respectively weighted by a precoding weighting vector, assuming the vectors for weighting are

$$w = \begin{bmatrix} w_1 \\ w_2 \end{bmatrix} = \begin{bmatrix} w_{11}, w_{12} \\ w_{21}, w_{22} \end{bmatrix},$$

$$X_1 = w_1 * \begin{bmatrix} S_1 \\ S_2 \end{bmatrix} = \begin{bmatrix} x_{1,1}, x_{1,2}, \cdots, x_{1,M} \end{bmatrix},$$

$$X_2 = w_2 * \begin{bmatrix} S_1 \\ S_2 \end{bmatrix} = \begin{bmatrix} x_{1,1}, x_{1,2}, \cdots, x_{1,M} \end{bmatrix}; \text{ then } X_1 \text{ and } X_2$$

are respectively performed with the DFT processing, the multiplexing processing, the multiple-antenna processing and resource element mapping, and the IFFT processing, and are added with the CP and then transmitted by different antennas.

Example 5, the mapping mode adopted by the method provided by the embodiment of the present invention is performing a CDD interlacing processing on the data of different data streams.

The signal of the data stream to be sent are expressed as: $S_1 = [s_{1,1}, s_{1,2}, \cdots, s_{1,M}]$, $S_2 = [s_{2,1}, s_{2,2}, \cdots s_{2,M}]$; the real part and the imaginary part of $S_1$ and $S_2$ are respectively performed with different CDDs, and let $x_1 = Re(S_1) + CDD1(Im(S_2))$, $x_2 = Re(S_2) + CDD2(Im(S_1))$, wherein the $CDDn(x)$ represents performing different CDD processing on $x$. The $Re(a)$ and the $Im(a)$ respectively indicate the real part and the imaginary part of $a$. The DFT is performed after the processing, therefore, the real part and the imaginary part of each data stream are transmitted by different antennas, and experience with different fading. Therefore the two data streams experience the same channel characteristic. On the one hand, diversity effect can be obtained; on the other hand, the channel characteristic of the two data streams can be fed back by a uniform mode, so as to reduce the feedback overhead.

According to the embodiments of the prevent invention, a computer readable medium is also provided. The computer readable medium stores executable instruction of the computer, when the instruction is executed by a computer or a processor, the computer or the processor is made to perform the processing of step 101 to step 103 shown in Fig.4, preferably, one or more of above Example 1 to Example 5 can be executed.

In summary, if a linearity processing is performed on the data by the DFT processing in the prior art, though the linearity of the data is not destroyed and the PAPR is not affect, many diversity modes are limited, therefore, the obtained effect of the diversity gain is limited. However, in the solution of the embodiments of the present invention, the pre-mapping processing is performed before the DFT processing, which on the one hand, is more suitable for various diversity modes, so as to obtain a larger diversity gain; on the other hand, since the pre-mapping processing is a pre-mapping processing directed towards the processing mode of the current multiple-antenna processing, and will not destroy the linearity of the data in the subsequent multiple-antenna processing, which reduces the influence on the PAPR. Wherein for the obtaining a part of the diversity gain by the pre-mapping processing, in the prior art, if a multiple-antenna diversity processing, such as the FSTD diversity, is performed after the DFT processing, since the linearity relation of the data is destroyed, the PAPR will be affected. If other diversity modes are adopted, such as the CDD mode, though the linearity relation will not be destroyed, a phenomenon of data puncturing will appear in the CDD mode, that is, after the CDD processing, the phases of two layers of data in a certain resource element are opposite, which brings about mutual counteraction, and the performance is affected. The solution provided in the embodiment of the present invention selects a suitable pre-mapping processing, referring to above Example 1, by exchanging part of the data of the two data streams, then performing a DFT processing, any one of the two data streams is equivalent to be transmitted on the two antennas, therefore space diversity gain is obtained. Taking the above Example 3 as another example, by performing a serial-parallel conversion on the data in the data streams before the DFT processing, it can be ensured that the data in the data streams are transmitted by two antennas without affecting the PAPR, that is because the operation such as exchanging/interlacing/multiplying with cycle phase before the DFT processing will not influence the PAPR. However, in the linearity processing after the DFT processing, only a few modes can still obtain the diversity gain, but the system design is limited, thereby the diversity gain is also limited. It should be noted that the solutions provided in the embodiments of the present invention mainly increase the diversity gain.

In addition, the realization of the present invention does not modify the system architecture and the current processing flow, it only adds a means, so it is easy to be realized, convenient to be spread in the technology field, and it has a substantial industry applicability.

Above description is only the preferable embodiments of the present invention, it is not used to limit the protection scope of the present invention.

**Claims**

1. A multiple-antenna signal processing system, the system comprises: a Discrete Fourier Transform DFT processing unit, a multiple-antenna processing and resource element mapping unit, and an Inverse Fast Fourier Transform IFFT processing unit, **characterized in that** the system further comprises a pre-mapping processing unit, which is configured to perform a mapping on input data stream(s) based on a current multiple-antenna processing mode, so as to realize the pre-mapping processing (102), and outputs the pre-mapped data stream(s) to the DFT processing unit,
wherein, the pre-mapping processing unit is configured to map N input data streams to M layers, both N and M are integers which are greater than or equal to 1
the multiple-antenna processing mode is divided into two cases which are diversity and multiplexing, wherein
in case of diversity, N=1, and
with regard to Cyclic Delay Diversity, CDD, mode, M being equal to 1, no pre-mapping processing being performed; and with regard to Frequency switch transmit diversity, FSTD, mode, M being equal to the number of the antennas,
in case of multiplexing, N>1, and
N being equal to M in case that the number of the antennas is equal to the number of the input data streams to be transmitted, and
combining the diversity and the multiplexing and determining whether N equals to M based on the mode adopted by the diversity in case that the input data streams is less than the number of the antennas.

2. The system according to Claim 1, **characterized in that** the pre-mapping processing unit is further configured to realize the mapping by using different mapping modes; wherein
the mapping modes comprise one of the following: mapping mode of performing said Cyclic Delay Diversity, mapping mode of weighting with cycle phase, mapping mode of weighting with normalized weighting vector on different input data streams, mapping mode of mapping one or more modulation symbols in the input data stream(s) to multiple layers, mapping mode for performing encoding processing on the input data stream(s), and mapping mode of performing exchange processing among the input data streams; wherein the mapping mode of performing exchange processing among the input data streams comprises one of the following: mapping mode of performing switch processing among the input data streams and mapping mode of performing interleaving processing among the input data streams.

3. A multiple-antenna signal processing method, **characterized in that** the method comprises a step of performing a mapping on input data stream(s) based on a current multiple-antenna processing mode, so as to realize a pre-mapping processing (102), and a step of performing a DFT processing after the input data stream(s) pre-mapping performed,

   wherein, a pre-mapping processing unit is configured to map N input data streams to M layers, both N and M are integers which are greater than or equal to 1,

   the multiple-antenna processing mode is divided into two cases which are diversity and multiplexing, wherein

   in case of diversity, N=1, and

   with regard to Cyclic Delay Diversity, CDD, mode, M being equal to 1, no pre-mapping processing being performed; and with regard to Frequency switch transmit diversity , FSTD, mode, M being equal to the number of the antennas,

   in case of multiplexing, N>1, and

   N being equal to M in case that the number of the antennas is equal to the number of the input data streams to be transmitted, and

   combining the diversity and the multiplexing and determining whether N equals to M based on the mode adopted by the diversity in case that the input data streams is less than the number of the antennas.

4. The method according to Claim 3, **characterized in that** one of following mapping modes are used when performing the mapping: mapping mode of performing said CDD, mapping mode of weighting with cycle phase, mapping mode of weighting on different input data streams with normalized weighting vector, mapping mode of mapping one or more modulation symbols in the input data stream(s) to multiple layers, mapping mode of performing encoding processing on the input data stream(s), and mapping mode of performing exchange processing among the input data streams.

5. The method according to Claim 4, **characterized in that** the mapping mode of performing exchange processing among the input data streams comprises: mapping mode used when there are multiple input data streams; mapping mode of performing exchange processing among the input data streams comprises one of the following: mapping mode of performing switch processing among the input data streams and mapping mode of performing interleaving processing among the input data streams.

6. The method according to Claim 5, **characterized in that** the mapping mode of performing switch processing among the input data streams comprises: performing switch processing among the input data streams every at least two data symbols;

   the mapping mode of performing interleaving processing among the input data streams is: realizing the interleaving processing among the input data streams by an interleaver.

7. The method according to Claim 4, **characterized in that** in the case of diversity, the mapping mode of performing encoding processing on the input data stream(s) is:

   performing a serial-parallel conversion on data symbols of one received input data stream according to the odd position and even position of the data symbols to obtain at least two sub-datastreams; and the at least two sub-datastreams being transmitted respectively by different antennas after the DFT processing is performed on the sub-datastreams respectively.

8. The method according to Claim 4, **characterized in that** in the case of multiplexing, the mapping mode of performing exchange processing among the input data streams is: the mapping mode of performing switch processing among the input data streams; wherein

   the mapping mode of performing switch processing among the input data streams is:

   performing an interlaced switch processing on at least two input data streams received which are encoded and modulated independently, and performing position exchange between data symbols in odd positions of a first input data stream and the data symbols in odd positions of the other input data streams; or performing position exchange between data symbols in even positions of the first input data stream and the data symbols in the even positions of the other input data streams; or performing position exchange between the data symbols in the odd positions of the first input data stream and the data symbols in the even positions of the other input data streams; or performing position exchange between the data symbols in the even positions of the first input data stream and the data symbols in the odd positions of the other input data streams; or segment wise performing position exchange between the data symbols in every (m+1) positions of the first input data stream and the data symbols in every (m+1) positions of a second input data stream, wherein m is an integer which is greater than 1.

**Patentansprüche**

1. Mehrantennensignalverarbeitungssystem, wobei das System folgendes umfasst:

    eine Diskrete Fourier-Transformations(DFT)-Verarbeitungseinheit, eine Mehrantennenverarbeitungs- und Ressourcenelement-Abbildungseinheit, und eine Inverse Fast Fourier-Transformations(IFFT)-Verarbeitungseinheit, **dadurch gekennzeichnet, dass** das System ferner eine Vorabbildungs-Verarbeitungseinheit umfasst, die so konfiguriert ist, dass sie eine Abbildung an dem/den Eingangsdatastrom/-strömen auf der Basis eines aktuellen Mehrantennenverarbeitungsmodus ausführt, um die Vorabbildungsverarbeitung zu realisieren (102), und den/die vorabgebildeten Datenstrom/-ströme an die DFT-Verarbeitungseinheit ausgibt;
    wobei die Vorabbildungs-Verarbeitungseinheit so konfiguriert ist, dass sie N Eingangsdatenströme in M-Ebenen abbildet, wobei N und M ganze Zahlen von größer oder gleich 1 sind;
    wobei der Mehrantennenverarbeitungsmodus in zwei Fälle unterteilt ist, Diversity und Multiplexing, wobei:

        bei Diversity N = 1 gilt, und
        wobei in Bezug auf den Cyclic Delay Diversity(CDD)-Modus, M gleich 1 ist, keine Vorabbildungsverarbeitung ausgeführt wird; und wobei in Bezug auf den Frequency Switch Transmit Diversity(FSTD)-Modus M gleich der Anzahl der Antennen ist,
        bei Multiplexing N>1 gilt, und
        wobei N gleich M ist, wenn die Anzahl der Antennen gleich der Anzahl der zu übermittelnden Eingangsdatenströme ist, und wobei
        Diversity und Multiplexing kombiniert werden und bestimmt wird, ob N gleich M ist auf der Basis des durch Diversity verwendeten Modus, wenn die Eingangsdatenströme kleiner sind als die Anzahl der Antennen.

2. System nach Anspruch 1, **dadurch gekennzeichnet, dass** die Vorabbildungs-Verarbeitungseinheit ferner so konfiguriert ist, dass sie die Abbildung unter Verwendung unterschiedlicher Abbildungsmodi realisiert; wobei
    die Abbildungsmodi einen der folgenden Modi umfassen: Abbildungsmodus zum Ausführen der genannten Cyclic Delay Diversity, Abbildungsmodus zur Gewichtung mit der Zyklusphase, Abbildungsmodus der Gewichtung mit normalisiertem Gewichtungsvektor an unterschiedlichen Eingangsdatenströmen, Abbildungsmodus der Abbildung eines oder mehrerer Modulationssymbole in dem/den Eingangsdatenstrom/-strömen auf mehrere Ebenen, Abbildungsmodus zum Ausführen einer Codierungsverarbeitung an dem/den Eingangsdatenstrom/-strömen und Abbildungsmodus zum Ausführen einer Tauschverarbeitung unter den Eingangsdatenströmen; wobei der Abbildungsmodus zum Ausführen einer Tauschverarbeitung unter den Eingangsdatenströmen einen der folgenden umfasst: Abbildungsmodus zum Ausführen einer Umschaltverarbeitung unter den Eingangsdatenströmen und einen Abbildungsmodus zum Ausführen einer Verschachtelungsverarbeitung unter den Eingangsdatenströmen.

3. Mehrantennensignalverarbeitungsverfahren, **dadurch gekennzeichnet, dass** das Verfahren einen Schritt des Ausführens einer Abbildung an dem/den Eingangsdatenstrom/-strömen auf der Basis eines aktuellen Mehrantennenverarbeitungsmodus ausführt, um die Vorabbildungsverarbeitung (102) zu realisieren, und einen Schritt des Ausführens einer DFT-Verarbeitung nach Ausführung der Vorabbildung des/der Eingangsdatenstroms/-ströme,
    wobei eine Vorabbildungs-Verarbeitungseinheit so konfiguriert ist, dass sie N Eingangsdatenströme in M-Ebenen abbildet, wobei N und M ganze Zahlen von größer oder gleich 1 sind;
    wobei der Mehrantennenverarbeitungsmodus in zwei Fälle unterteilt ist, Diversity und Multiplexing, wobei:

        bei Diversity N = 1 gilt, und
        wobei in Bezug auf den Cyclic Delay Diversity(CDD)-Modus, M gleich 1 ist, keine Vorabbildungsverarbeitung ausgeführt wird; und wobei in Bezug auf den Frequency Switch Transmit Diversity(FSTD)-Modus M gleich der Anzahl der Antennen ist,
        bei Multiplexing N>1 gilt, und
        wobei N gleich M ist, wenn die Anzahl der Antennen gleich der Anzahl der zu übermittelnden Eingangsdatenströme ist, und wobei
        Kombinieren von Diversity und Multiplexing und Bestimmen, ob N gleich M ist auf der Basis des durch Diversity verwendeten Modus, wenn die Eingangsdatenströme kleiner sind als die Anzahl der Antennen.

4. Verfahren nach Anspruch 3, **dadurch gekennzeichnet, dass** einer der folgenden Abbildungsmodi bei der Ausführung der Abbildung verwendet wird: Abbildungsmodus zum Ausführen der genannten CDD, Abbildungsmodus zur Gewichtung mit der Zyklusphase, Abbildungsmodus der Gewichtung mit normalisiertem Gewichtungsvektor an unterschiedlichen Eingangsdatenströmen, Abbildungsmodus der Abbildung eines oder mehrerer Modulationssymbole in dem/den Eingangsdatenstrom/-strömen auf mehrere Ebenen, Abbildungsmodus zum Ausführen einer Codierungsverarbeitung an dem/den Eingangsdatenstrom/-strömen und Abbildungsmodus zum Ausführen einer Tauschverarbeitung unter den Eingangsdatenströmen.

5. Verfahren nach Anspruch 4, **dadurch gekennzeichnet, dass** der Abbildungsmodus zum Ausführen einer Tauschverarbeitung unter den Eingangsdatenströmen folgendes umfasst: Abbildungsmodus zum Ausführen einer Umschaltverarbeitung unter den Eingangsdatenströmen und einen Abbildungsmodus zum Ausführen einer Verschachtelungsverarbeitung unter den Eingangsdatenströmen.

6. Verfahren nach Anspruch 5, **dadurch gekennzeichnet, dass** der Abbildungsmodus zum Ausführen einer Umschaltverarbeitung unter den Eingangsdatenströmen folgendes umfasst: Ausführen einer Umschaltverarbeitung unter den Eingangsdatenströmen für alle wenigstens zwei Datensymbole; wobei der Abbildungsmodus zum Ausführen einer Verschachtelungsverarbeitung unter den Eingangsdatenströmen folgendes ist: Realisieren der Verschachtelungsverarbeitung unter den Eingangsdatenströmen durch eine Verschachtelungseinrichtung.

7. Verfahren nach Anspruch 4, wobei im Falle von Diversity der Abbildungsmodus zum Ausführen einer Codierungsverarbeitung an dem/den Eingangsdatenstrom/-strömen folgendes ist:

Ausführen einer seriellen-parallelen Umwandlung an Datensymbolen eines empfangenen Eingangsdatenstroms gemäß der ungeraden Position und der geraden Position der Datensymbole, um wenigstens zwei Unterdatenströme zu erhalten; und wobei die wenigstens zwei Unterdatenströme entsprechend durch verschiedene Antennen übermittelt werden, nachdem die DFT-Verarbeitung entsprechend an den Unterdatenströmen ausgeführt worden ist.

8. Verfahren nach Anspruch 4, **dadurch gekennzeichnet, dass** im Falle von Multiplexing der Abbildungsmodus zum Ausführen der Tauschverarbeitung unter den Eingangsdatenströmen folgendes ist: der Abbildungsmodus des Ausführens der Umschaltverarbeitung unter den Eingangsdatenströmen; wobei
der Abbildungsmodus des Ausführens der Umschaltverarbeitung unter den Eingangsdatenströmen folgendes ist:

Ausführen einer verschachtelten Umschaltverarbeitung an wenigstens zwei empfangenen Eingangsdatenströmen, die unabhängig voneinander codiert und moduliert sind, und Ausführen eines Positionswechsels zwischen den Datensymbolen an den ungeraden Positionen eines ersten Eingangsdatenstroms und den Datensymbolen an den ungeraden Positionen der anderen Eingangsdatenströme; oder
Ausführen eines Positionswechsels zwischen den Datensymbolen an den geraden Positionen des ersten Eingangsdatenstroms und den Datensymbolen an den geraden Positionen der anderen Eingangsdatenströme; oder
Ausführen eines Positionswechsels zwischen den Datensymbolen an den ungeraden Positionen des ersten Eingangsdatenstroms und den Datensymbolen an den geraden Positionen der anderen Eingangsdatenströme; oder
Ausführen eines Positionswechsels zwischen den Datensymbolen an den geraden Positionen des ersten Eingangsdatenstroms und den Datensymbolen an den ungeraden Positionen der anderen Eingangsdatenströme; oder
Ausführen eines Positionswechsels nach Segment zwischen den Datensymbolen an jeder $(m+1)$ Position des ersten Eingangsdatenstroms und den Datensymbolen an jeder $(m+1)$ Position eines zweiten Datenstroms, wobei $m$ eine ganze Zahl größer 1 ist.

**Revendications**

1. Système de traitement de signaux à antennes multiples, le système comprenant :

une unité de traitement par transformée de Fourier discrète (DFT), une unité de mappage d'élément de ressource et de traitement à antennes multiples et une unité de traitement par transformée de Fourier rapide inverse (IFFT), **caractérisé en ce que** le système comprend en outre une unité de traitement par pré-mappage, qui est conçue pour effectuer un mappage sur un(des) flux de données d'entrée en fonction d'un mode de traitement à antennes multiples actuel, afin d'effectuer le traitement par pré-mappage (102), et transmet le(s) flux de données pré-mappés à l'unité de traitement DFT, l'unité de traitement par pré-mappage étant conçue pour mapper N flux de données d'entrée en M couches, N et M étant des entiers qui sont supérieurs ou égaux à 1,
le mode de traitement à antennes multiples étant divisé en deux cas qui sont la diversité et le multiplexage,
dans le cas de la diversité, N=1, et

en ce qui concerne le mode de diversité de retard cyclique (CDD), M étant égal à 1, aucun traitement par pré-mappage n'étant effectué ; et en ce qui concerne le mode de diversité de transmission de commutateur de fréquence (FSTD), M étant égal au nombre d'antennes,

dans le cas du multiplexage, N>1, et

N étant égal à M dans le cas où le nombre d'antennes est égal au nombre de flux de données d'entrée à transmettre, et

combinant la diversité et le multiplexage et déterminant si N est égal à M selon le mode adopté par la diversité dans le cas où les flux de données d'entrée sont inférieurs au nombre d'antennes.

2. Système selon la revendication 1, **caractérisé en ce que** l'unité de traitement par pré-mappage est conçue en outre pour effectuer le mappage à l'aide de différents modes de mappage ;

les modes de mappage comprennent l'un des modes suivants : mode de mappage par exécution de ladite diversité de retard cyclique, mode de mappage par pondération avec phase de cycle, mode de mappage par pondération avec vecteur de pondération normalisé sur différents flux de données d'entrée, mode de mappage par mappage d'un ou de plusieurs symboles de modulation dans le(s) flux de données d'entrée avec des couches multiples, mode de mappage par exécution d'un traitement de codage sur le(s) flux de données d'entrée et mode de mappage par exécution d'un traitement d'échange parmi les flux de données d'entrée ; le mode de mappage par exécution d'un traitement d'échange parmi les flux de données d'entrée comprenant l'un des modes suivants : mode de mappage par exécution d'un traitement de commutation parmi les flux de données d'entrée et mode de mappage par exécution d'un traitement d'entrelacement parmi les flux de données d'entrée.

3. Procédé de traitement de signaux à antennes multiples, **caractérisé en ce que** le procédé comprend une étape consistant à effectuer un mappage sur le(s) flux de données d'entrée en fonction d'un mode de traitement à antennes multiples actuel, de sorte à effectuer un traitement par pré-mappage (102), et une étape consistant à effectuer un traitement DFT après que le pré-mappage de flux(s) de données d'entrée a été effectué,

une unité de traitement par pré-mappage étant conçue pour mapper N flux de données d'entrée en M couches, N et M étant des entiers qui sont supérieurs ou égaux à 1,

le mode de traitement à antennes multiples étant divisé en deux cas qui sont la diversité et le multiplexage,

dans le cas de la diversité, N=1, et

en ce qui concerne le mode de diversité de retard cyclique (CDD), M étant égal à 1, aucun traitement par pré-mappage n'étant effectué ; et en ce qui concerne le mode de diversité de transmission de commutateur de fréquence (FSTD), M étant égal au nombre d'antennes,

dans le cas du multiplexage, N>1, et

N étant égal à M dans le cas où le nombre d'antennes est égal au nombre de flux de données d'entrée à transmettre, et

combinant la diversité et le multiplexage et déterminant si N est égal à M selon le mode adopté par la diversité dans le cas où les flux de données d'entrée sont inférieurs au nombre d'antennes.

4. Procédé selon la revendication 3, **caractérisé en ce que** l'un des modes de mappage suivant est utilisé pour effectuer le mappage : mode de mappage par exécution de ladite CDD, mode de mappage par pondération avec phase de cycle, mode de mappage par pondération sur différents flux de données d'entrée avec vecteur de pondération normalisé, mode de mappage par mappage d'un ou de plusieurs symboles de modulation dans le(s) flux de données d'entrée avec des couches multiples, mode de mappage par exécution d'un traitement de codage sur le(s) flux de données d'entrée et mode de mappage par exécution d'un traitement d'échange entre les flux de données d'entrée.

5. Procédé selon la revendication 4, **caractérisé en ce que** le mode de mappage par exécution d'un traitement d'échange parmi les flux de données d'entrée comprend :

mode de mappage utilisé lorsqu'il y a plusieurs flux de données d'entrée ; le mode de mappage par exécution d'un traitement d'échange parmi les flux de données d'entrée comprenant l'un des modes suivants : mode de mappage par exécution d'un traitement de commutation parmi les flux de données d'entrée et mode de mappage par exécution d'un traitement d'entrelacement parmi les flux de données d'entrée.

6. Procédé selon la revendication 5, **caractérisé en ce que** le mode de mappage par exécution d'un traitement de commutation parmi les flux de données d'entrée comprend l'étape consistant à : effectuer un traitement de commutation parmi les flux de données d'entrée au moins tous les deux symboles de données ;

le mode de mappage par exécution d'un traitement d'entrelacement parmi les flux de données d'entrée consiste à : effectuer le traitement d'entrelacement parmi les flux de données d'entrée par un entrelaceur.

**7.** Procédé selon la revendication 4, **caractérisé en ce que** dans le cas de la diversité, le mode de mappage par exécution d'un traitement de codage sur le(s) flux de données d'entrée consiste à :

effectuer une conversion série-parallèle sur les symboles de données d'un flux de données d'entrée reçu selon la position impaire et la position paire des symboles de données pour obtenir au moins deux sous-flux de données ; et les au moins deux sous-flux de données étant transmis respectivement par différentes antennes après que le traitement DFT est effectué sur les sous-flux de données respectivement.

**8.** Procédé selon la revendication 4, **caractérisé en ce que** dans le cas du multiplexage, le mode de mappage par exécution d'un traitement d'échange parmi les flux de données d'entrée est : le mode de mappage par exécution d'un traitement de commutation parmi les flux de données d'entrée ;
le mode de mappage par exécution d'un traitement de commutation parmi les flux de données d'entrée consiste à :

effectuer un traitement de commutation entrelaçé sur au moins deux flux de données d'entrée reçus qui sont codés et modulés de façon indépendante, et effectuer un échange de position entre les symboles de données dans des positions impaires d'un premier flux de données d'entrée et les symboles de données dans des positions impaires de l'autre flux de données d'entrée ; ou
effectuer un échange de position entre les symboles de données dans des positions paires du premier flux de données d'entrée et les symboles de données dans les positions paires des autres flux de données d'entrée ; ou
effectuer un échange de position entre les symboles de données dans des positions impaires du premier flux de données d'entrée et les symboles de données dans les positions paires des autres flux de données d'entrée ; ou
effectuer un échange de position entre les symboles de données dans des positions paires du premier flux de données d'entrée et les symboles de données dans les positions impaires des autres flux de données d'entrée ; ou
effectuer dans le sens des segments un échange de position entre les symboles de données à chaque (m+1) position du premier flux de données d'entrée et les symboles de données à chaque (m+1) position d'un second flux de données d'entrée, m étant un entier supérieur à 1.

| Pre-mapping processing unit | DFT processing unit | Multiple-antenna processing and resource element mapping unit | IFFT processing unit |

**Fig.1**

$S_1 = [s_{1,1}, s_{1,2}, \cdots, s_{1,M}]$    $X_1 = [x_{1,1}, x_{1,2}, \cdots, x_{1,M}]$    $C_1 = [c_{1,1}, c_{1,2}, \cdots, c_{1,M}]$

| Pre-mapping processing unit | DFT processing unit | Multiple-antenna processing and resource element mapping unit | IFFT processing unit |

$S_N = [s_{N,1}, s_{N,2}, \cdots, s_{N,M}]$    $X_{N,1} = [x_{N,1}, x_{N,2}, \cdots, x_{N,M}]$    $C_N = [c_{N,1}, c_{N,2}, \cdots, c_{N,M}]$

**Fig.2**

$\hat{S}_1 = [\hat{s}_{1,1}, \hat{s}_{1,2}, \cdots, \hat{s}_{1,M}]$    $\hat{X}_1 = [\hat{x}_{1,1}, \hat{x}_{1,2}, \cdots, \hat{x}_{1,M}]$    $\hat{C}_1 = [\hat{c}_{1,1}, \hat{c}_{1,2}, \cdots, \hat{c}_{1,M}]$

| De-pre-mapping processing unit | IDFT processing unit | De-multiple-antenna processing and de-resource element mapping unit | FFT processing unit |

$\hat{S}_N = [\hat{s}_{N,1}, \hat{s}_{N,2}, \cdots, \hat{s}_{N,M}]$    $\hat{X}_N = [\hat{x}_{N,1}, \hat{x}_{N,2}, \cdots, \hat{x}_{N,M}]$    $\hat{C}_N = [\hat{c}_{N,1}, \hat{c}_{N,2}, \cdots, \hat{c}_{N,M}]$

**Fig.3**

```
┌─────────────────────────────────────┐
│   inputting the modulated data to the pre-   │  ╱  101
│          mapping processing unit              │ ╱
└─────────────────────────────────────┘
                    │
                    ▼
┌─────────────────────────────────────┐
│  mapping the input data streams according to  │
│  processing mode of the current multiple-     │  ╱  102
│  antenna processing in the pre-mapping        │ ╱
│  processing unit so as to realize the pre-    │
│          mapping processing                   │
└─────────────────────────────────────┘
                    │
                    ▼
┌─────────────────────────────────────┐
│  after the data streams pre-mapped are output, │  ╱ 103
│  performing the DFT processing, the multiple-  │ ╱
│  antenna processing and resource element      │
│  mapping, and the IFFT processing; and         │
│  outputting the data streams after adding the CP│
└─────────────────────────────────────┘
```

# Fig.4

# Fig.5

**Fig.6**

**Fig.7**

**Fig.8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080049709 A1

- US 20080037413 A1

**Non-patent literature cited in the description**

- Physical Layer of E-UTRAN. **PIERRE LESCUYER ; THIERRY LUCIDARME.** Evolved Packet System (EPS) - The LTE and SAE evolution of 3G UMTS. 29 February 2008, 75-170